# EUROPÄISCHE PATENTSCHRIFT

(11) **EP 4 401 944 B1**
(45) Veröffentlichungstag und Bekanntmachung des Hinweises auf die Patenterteilung: **28.05.2025**
(21) Anmeldenummer: 22785950.1
(22) Anmeldetag: 12.09.2022
(51) Int. Cl.: B29C 49/42, B29C 49/06, B29K 67/00, B29L 31/00

(54) **VORRICHTUNG ZUM HERSTELLEN VON BEHÄLTERN AUS VORFORMLINGEN AUS THERMOPLASTISCHEM MATERIAL**
DEVICE FOR PRODUCING CONTAINERS FROM PREFORMS MADE OF THERMOPLASTIC MATERIAL
SYSTÈME POUR FABRIQUER DES CONTENANTS À PARTIR DE PRÉFORMES EN MATIÈRE THERMOPLASTIQUE

(30) Priorität: 14.09.2021 DE 102021123764
(43) Veröffentlichungstag der Anmeldung: 24.07.2024
(73) Patentinhaber: KHS GmbH, 44143 Dortmund (DE)
(72) Erfinder: LEWIN, Frank, 22889 Tangstedt (DE); BAUMGARTE, Rolf, 22926 Ahrensburg (DE); LINKE, Michael, 22159 Hamburg (DE)
(74) Vertreter: Greiche, Albert
(86) Internationale Anmeldenummer: PCT/EP2022/075221
(87) Internationale Veröffentlichungsnummer: WO 2023/041463

(56) Entgegenhaltungen:
- DE-A1- 10 325 693
- DE-A1- 102016 104 257
- DE-A1- 4 133 114
- US-A1- 2019 134 877

## Beschreibung

Die Erfindung betrifft eine Vorrichtung zum Herstellen von Behältern aus Vorformlingen aus thermoplastischem Material.

Zur Herstellung von Behältern, insbesondere Behältern aus Kunststoff, können Verfahren verwendet werden, die Vorformlinge mittels Blasformung oder hydraulischer Formung umformen. Für die Produktion von großen Stückzahlen werden Rotationsmaschinen verwendet. Mit den Rotationsmaschinen werden nacheinander eine Vielzahl von Kunststoff-Vorformlingen an eine Vielzahl von Formvorrichtungen übergeben, die mit einem Rotorabschnitt der Rotationsmaschine, z. B. einem Blasrad oder einem Füllrad, verbunden sind. Zur Übergabe der Vorformlinge an die Rotationsmaschine bzw. zur Abnahme der Behälter von der Rotationsmaschine können die Behälter oder Vorformling mit Greifeinrichtungen gegriffen bzw. bereitgestellt werden. Die Greifeinrichtungen greifen die Behälter oder Vorformlinge dabei in deren Halsbereich. Dazu werden die Greifeinrichtungen in radialer Richtung in Bezug auf den Rotorabschnitt verschoben.

Aus EP 2 114 804 B1 ist eine Rotationsmaschine bekannt, bei der Zangen an Tragarmen befestigt sind. Die Tragarme sind teleskopierbar ausgebildet. Mittels Kurvenbahnen werden die Tragarme teleskopartig in radialer Richtung aus- und eingefahren, so dass ebenfalls die an ihnen befestigten Zangen aus- und eingefahren werden. Die Tragarme weisen dabei Lineargleitlager oder geschmierte Wälzkörper-Linearführungen auf. Weiter können die Tragarme um eine vertikale Achse geschwenkt werden. Auch die Schwenkbewegung wird mittels der Kurvenbahnen gesteuert.

Aus DE 10 2016 104257 A1 ist eine Vorrichtung zum Transportieren und/oder Einsortieren von Kunststoffbehältnissen und insbesondere Kunststoffvorformlingen in eine Transporteinrichtung, mit einer Vorhalteeinrichtung bekannt, welche die Kunststoffbehältnisse in einem vorgegebenen Übergabebereich vorhält. Dabei weist die Vorrichtung eine Aufnahmeeinrichtung auf, welche dazu geeignet und bestimmt ist einzelne Kunststoffbehältnisse oder Gruppen von Kunststoffbehältnissen von der Vorhalteeinrichtung aufzunehmen und sie an die weitere Transporteinrichtung zu übergeben, wobei die Aufnahmeeinrichtung entlang variabler Bewegungspfade bewegbar ist, um die Kunststoffbehältnisse aufzunehmen.

US 2019/134877 A1 beschreibt eine Vorrichtung zum Umformen von Kunststoffvorformlingen zu Kunststoffbehältnissen mit einer Transporteinrichtung, welche Kunststoffvorformlinge entlang eines vorgegebenen Transportpfads transportiert, mit wenigstens einer Umformungsstation, welche entlang dieses Transportpfads stationär angeordnet ist, wobei die Umformungsstation eine Blasform aufweist, welche geöffnet und geschlossen werden kann und welche in einem geschlossenen Zustand einen Hohlraum ausbildet, innerhalb dessen die Kunststoffvorformlinge durch Beaufschlagung mit einem gasförmigen Medium zu den Kunststoffbehältnissen umformbar sind und wobei die Umformungsstation eine Verschließeinheit aufweist, um die Blasform zu schließen und diese Verschließeinheit wenigstens einen Bestandteil der Blasform aufweist, der gegenüber einem anderen Bestandteil der Blasform beweglich ist, und wobei die Umformungsstation weiterhin eine Beaufschlagungseinrichtung aufweist, welche an einen Bereich der Kunststoffvorformlinge und/oder der Blasformen anlegbar ist, um diese Kunststoffvorformlinge mit dem gasförmigen Medium zu beaufschlagen sowie eine Ventileinheit, um die Zuführung des den Kunststoffvorformlingen zuzuführenden gasförmigen Mediums zu steuern. Dabei weist die Verschließeinheit eine die Blasform in einer Umfangsrichtung wenigstens teilweise umgebende Wandung auf und die Ventileinheit ist innerhalb dieser Wandung angeordnet.

Die DE 41 33 114 A1 beschreibt ein Fördersystem, das einen asynchronen Linearmotor als Förderantrieb verwendet, der einen Längsstator mit stationären elektrischen und elektronischen Bauteilen und bürstenlose Rotoren zum Fördern der Einzelteile aufweist. Vorzugsweise ist jeder Rotor aus Aluminium oder einem magnetischen Material gefertigt, um mit den Elektromagneten des Stators zusammenzuwirken, wobei die Elektromagnete in jeder einzelnen Zone des Längsstators unabhängig von den Elektromagneten in den übrigen Zonen gesteuert werden. Vorzugsweise definiert der Stator einen geschlossenen Förderweg für die Rotoren, der es ermöglicht, die einzelnen Teile durch eine Reihe von aufeinanderfolgenden Stationen zu transportieren.

Weiter ist aus DE 103 25 693 A1 eine Transfervorrichtung bekannt, welche Gegenstände von einer Aufgabestation zu den Aufnahmeplätzen eines umlaufenden Förderers und von diesen zu einer Abgabestation transportiert. Dabei sind auf einem einzigen Rotor zwei Gruppen von Greifern relativ zueinander gesteuert bewegbar und es läuft der Rotor im Transferbereich in der gleichen Richtung um wie der Förderer. Hierdurch wird eine Transfervorrichtung geschaffen, die trotz kompaktem und kostengünstigem Aufbau auch bei höchsten Leistungen einen betriebssicheren und schonenden Transport der Gegenstände ermöglicht. Eine weitere gattungsgemäße Vorrichtung ist in dem Dokument US2018117825A1 beschrieben.

Aufgabe der Erfindung ist es, eine Vorrichtung zum Herstellen von Behältern aus Vorformlingen aus thermoplastischem Material bereitzustellen, die eine erhöhte Flexibilität im Betrieb und der Montage aufweist.

Die Aufgabe wird gelöst durch die Merkmale der unabhängigen Ansprüche. Vorteilhafte Weiterbildungen sind Gegenstand der abhängigen Ansprüche sowie der folgenden Beschreibung.

Bei einer Vorrichtung zum Herstellen von Behältern aus Vorformlingen aus thermoplastischem Material, wobei die Vorrichtung mindestens eine Transporteinrichtung mit mindestens einer Übergabeeinrichtung zum Bewegen von Behältern und/oder Vorformlingen zwischen einer ersten Übergabeposition und einer zweiten Übergabeposition umfasst, wobei die Übergabeeinrichtung ein Halteelement zum Halten eines Behälters und/oder Vorformlings aufweist, ist erfindungsgemäß vorgesehen, dass die Transporteinrichtung für die mindestens eine Übergabeeinrichtung eine gesonderte Antriebseinrichtung zum Bewegen der Übergabeeinrichtung zwischen einer ersten Übergabeposition und einer zweiten Übergabeposition aufweist.

Gemäß der Erfindung wird die zumindest eine Übergabeeinrichtung mittels einer eigenen Antriebseinrichtung zwischen der ersten Übergabeposition und der zweiten Übergabeposition bewegt. Wenn mehr als eine Übergabeeinrichtung vorhanden ist, weist die Transporteinrichtung für jede Übergabeeinrichtung eine eigene, d. h. gesonderte, Antriebseinrichtung auf. Die Übergabeeinrichtungen der Transporteinrichtung werden damit nicht durch einen einzigen gemeinsamen Antrieb, wie z. B. einem Rad oder einer Förderkette, angetrieben. Mit der gesonderten Antriebseinrichtung wird damit ein zentraler Antrieb durch ein Rad oder eine Kette nicht weiter benötigt. Weiter wird mittels der für die mindestens eine Übergabeeinrichtung ein individueller Antrieb bereitgestellt. Die Übergabeeinrichtung kann damit unabhängig von anderen Übergabeeinrichtungen zwischen der ersten Übergabeposition und der zweiten Übergabeposition bewegt werden. Die von dem Halteelement der mindestens einen Übergabeeinrichtung gehaltenen Behälter oder Vorformlinge können damit unabhängig von Behältern oder Vorformlingen, die durch andere Übergabeeinrichtungen der Transporteinrichtung gehalten und bewegt werden. Damit weist die Vorrichtung eine erhöhte Flexibilität auf.

Erfindungsgemäß umfasst die Transporteinrichtung eine sich zumindest entlang einer Transportstrecke zwischen der ersten und zweiten Übergabeposition erstreckende Trägerplatte, auf der die mindestens eine Übergabeeinrichtung angeordnet und mittels der Antriebseinrichtung frei auf der Trägerplatte bewegbar ist. Die Antriebseinrichtung kann autonom von der Transporteinrichtung bewegbar sein. Dazu kann die Antriebseinrichtung kabellos an der Transporteinrichtung angeordnet sein.

Die mindestens eine Übergabeeinrichtung kann damit den Vorformling oder Behälter zwischen der ersten Übergabeposition und der zweiten Übergabeposition auf einem anpassbaren Pfad bewegen. Wenn mehrere Übergabeeinrichtungen jeweils mit einer gesonderten Antriebseinrichtung gekoppelt werden, kann jede dieser Übergabeeinrichtungen auf der und verwendet werden. Frontale Kollisionen können damit reduziert werden und die Sicherheit der Handhabung der Vorrichtung wird damit erhöht.

Gemäß einem Beispiel kann die Antriebseinrichtung weiter zum Schwenken der Übergabeeinrichtung ausgebildet sein.

Damit kann die Übergabeeinrichtung den Vorformling und Behälter mittels der gesonderten Antriebseinrichtung je nach Bedarf schwenken, wobei die Übergabeeinrichtung durch die gesonderte Antriebseinrichtung z. B. um eine senkrechte Achse geschwenkt werden kann. In diesem Fall wird eine dedizierte Schwenkeinrichtung für die Übergabeeinrichtung nicht benötigt.

Gemäß einem weiteren Beispiel kann die Antriebseinrichtung zum Schwenken der Übergabeeinrichtung um eine waagrecht angeordnete Achse ausgebildet sein.

Damit können Vorformlinge oder Behälter durch eine Schwenkbewegung leicht angehoben werden. Dazu kann die Antriebseinrichtung beispielsweise ein Schwenkmodul aufweisen, das nicht zwingend zur Bewegung der Übergabeeinrichtung zwischen den Übergabepositionen beitragen muss. Weiter kann die Orientierung der Vorformlinge und Behälter durch das Schwenken um eine waagrechte Achse verändert werden. So können z. B. Engstellen an der Transportstrecke durch diese Schwenkbewegung passiert werden, ohne dass die Vorformlinge oder Behälter mit anderen Komponenten der Vorrichtung kollidieren. Weiter kann damit ein Passieren derartiger Engstellen erst ermöglicht werden. Weiter kann mit der Schwenkbewegung auch die Übergabe an den Übergabepositionen vereinfacht werden oder leichte Höhenunterschiede überwunden werden.

Die Antriebseinrichtung kann z. B. weiter zur Höhenverstellung der Übergabeeinrichtung ausgebildet sein.

Auf diese Weise können im Rahmen der Höhenverstellung die Übergabeposition flexibel ausgewählt werden. Weiter können die erste Übergabeposition und die zweite Übergabeposition auf verschiedenen Höhen angeordnet werden, so dass z. B. die Montage der Vorrichtung vereinfacht wird, da die Toleranzen bei der Einstellung der Höhen verschiedener Komponenten der Vorrichtung vergrößert werden.

Weiter kann die mindestens eine Übergabeeinrichtung berührungslos und/oder schmierstofffrei an der Transporteinrichtung gelagert, vorzugsweise magnetisch gelagert und/oder luftgelagert, sein.

Damit wird Abrieb bei einer Bewegung der Übergabeeinrichtung vermieden bzw. es wird kein Schmierstoff für den Betrieb der Transporteinrichtung benötigt. Auf diese Weise können höheren Hygieneanforderungen erfüllt werden. Weiter wird die Wartung der Transporteinrichtung vereinfacht und kostengünstiger. Wenn die Vorrichtung zum Herstellen von Behältern die Umformung der Vorformlinge in Behälter mittels Blasluft bewirkt, kann bei einer Luftlagerung der Übergabeeinrichtungen die Blasluftquelle ebenfalls für die Luftlagerung verwendet werden. Dazu kann die Antriebseinrichtung beispielsweise mit einem Schlauch über eine Dreheinführung mit der Blasluftquelle verbunden werden.

Es ist zum Beispiel weiter denkbar, dass die Antriebseinrichtung ein magnetisches Antriebselement zum Erzeugen einer Vorschubkraft mittels eines magnetischen Wechselfelds sein kann.

Das magnetische Wechselfeld kann durch das magnetische Antriebselement oder durch eine äußere Einrichtung erzeugt werden. Wenn das magnetische Antriebselement das magnetische Wechselfeld erzeugt, kann die Transportstrecke z. B. mit einem entsprechenden Boden ausgestattet sein, der in Wechselwirkung mit dem magnetischen Wechselfeld die Vorschubkraft für die Übergabeeinrichtung bereitstellt. Alternativ kann das magnetische Wechselfeld z. B. durch den Boden der Transportstrecke oder weitere Komponenten der Transporteinrichtung bereitgestellt werden. In diesem Fall kann die Antriebseinrichtung selbst in Wechselwirkung mit dem magnetischen Wechselfeld eine Vorschubkraft erzeugen.

Weiter kann die Antriebseinrichtung zum Beispiel mindestens einen planaren Motor aufweisen.

Der planare Motor kann z. B. auf der oben beschriebenen Trägerplatte angeordnet sein und sich auf der Trägerplatte frei bewegen.

In einem weiteren Beispiel kann die Transporteinrichtung mindestens zwei Übergabeeinrichtungen aufweisen.

Vorzugsweise weise die Transporteinrichtung eine Vielzahl z. B. 10 bis 30 Übergabeeinrichtungen auf. Je nach Länge der Transportstrecke und der Anzahl der Übergabepositionen können auch noch mehr Übergabeeinrichtungen mit einer gesonderten Antriebseinrichtung verwendet werden.

Die Vorrichtung kann gemäß einem weiteren Beispiel eine Steuereinheit zum Steuern der Antriebseinrichtung aufweisen, wobei die Steuereinheit über eine Signalverbindung mit der Antriebseinrichtung verbunden ist. Dazu kann die Antriebseinrichtung z. B. Sensoren aufweisen, die über die Signalverbindung Sensorsignale an die Steuereinheit übermitteln können.

Die Steuereinrichtung kann jede gesonderte Antriebseinrichtung individuell ansteuern und für jede gesonderte Antriebseinrichtung einen individuellen Pfad zwischen den Übergabepositionen festlegen. Weiter kann auch eine Übergabeposition übersprungen werden oder bei Bedarf eine Auswurfposition angefahren werden.

Die Signalverbindung kann zum Beispiel eine kabellose Verbindung ist, wobei die mindestens eine Übergabeeinrichtung vorzugsweise einen elektrischen Energiespeicher zum Betreiben der kabellosen Signalverbindung und der Antriebseinrichtung aufweisen kann.

Mit einer kabellosen Signalverbindung wird die Bewegungsfreiheit der Übergabeeinrichtung weiter vergrößert.

In einem alternativen oder zusätzlichen Beispiel kann Signalverbindung beispielsweise weiter mittels mindestens einer elektrischen Leitung ausgebildet sein, die die mindestens eine Übergabeeinrichtung und die Steuereinheit verbindet. Weiter kann die Übergabeeinrichtung mittels einer weiteren elektrischen Leitung an eine Energiequelle angeschlossen sein.

Gemäß einem weiteren Beispiel kann die Steuereinheit mittels der Antriebseinrichtung zum Bewegen der mindestens einen Übergabeeinrichtung zu der ersten Übergabeposition, an der ein Behälter oder Vorformling mittels des Halteelements gegriffen wird; und zum Bewegen der Übergabeeinrichtung entlang der Transportstrecke zu der zweiten Übergabeposition, an der der Behälter oder Vorformling aus dem Halteelement entnommen wird, ausgebildet sein.

Die Erfindung betrifft weiter ein Verfahren zum Steuern einer Vorrichtung nach der vorangegangenen Beschreibung, wobei das Verfahren zumindest die folgenden Schritte aufweist: Bewegen der mindestens einen Übergabeeinrichtung zu der ersten Übergabeposition mittels der gesonderten Antriebseinrichtung; Greifen eines Behälters oder Vorformlings mittels des Halteelements; Bewegen der mindestens einen Übergabeeinrichtung zu der zweiten Übergabeposition mittels der Antriebseinrichtung; und Übergeben des Behälters oder Vorformlings.

Vorteile und Wirkungen sowie Weiterbildungen des Verfahrens ergeben sich aus den Vorteilen und Wirkungen sowie Weiterbildungen der oben beschriebenen Vorrichtung. Zur Vermeidung von Wiederholungen wird daher in dieser Hinsicht auf die vorangegangene Beschreibung verwiesen.

Im Folgenden wird die Erfindung anhand einer beispielhaften Ausführungsform mittels der beigefügten Zeichnung beschrieben. Es zeigen:
- Figur 1: eine schematische Darstellung einer Vorrichtung zum Herstellen von Behältern;
- Figur 2: eine schematische Darstellung einer Transporteinrichtung;
- Figur 3: eine schematische Darstellung einer Übergabeeinrichtung;
- Figur 4a, b: eine schematische Darstellung einer weiteren Vorrichtung zum Herstellen von Behältern; und
- Figur 5: eine schematische Darstellung eines weiteren Beispiels einer Transporteinrichtung;
- Figur 6: ein Flussdiagramm des Verfahrens zum Herstellen von Behältern.

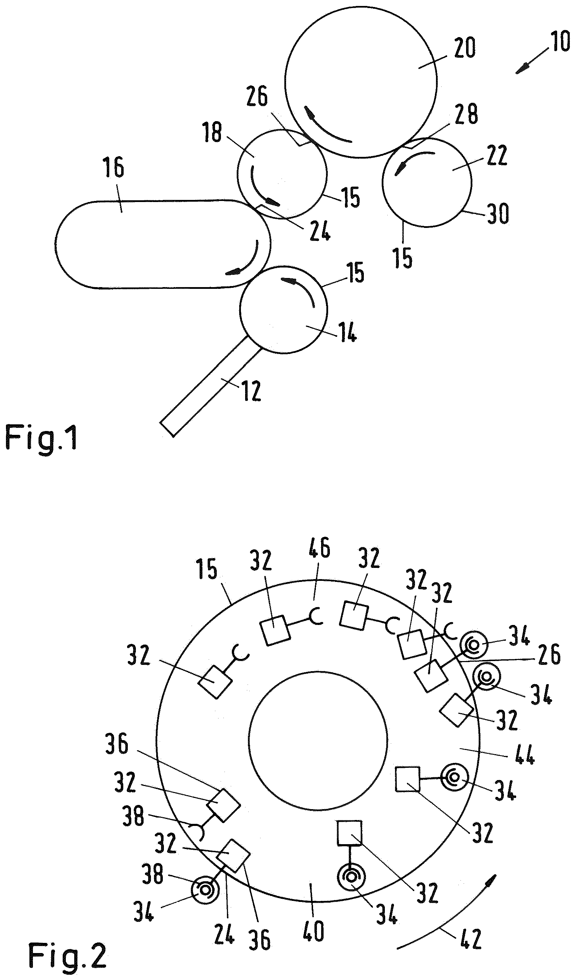

Die Vorrichtung zum Herstellen von Behältern wird im Folgenden in ihrer Gesamtheit mit dem Bezugszeichen 10 bezeichnet, wie in Figur 1 dargestellt.

Die Vorrichtung 10 kann eine Zuführeinrichtung 12, eine Übergabeeinheit 14, eine Heizeinrichtung 16, eine erste Transporteinheit 18, eine Formeinrichtung 20 und eine zweite Transporteinheit 22 aufweisen.

Die Übergabeeinheit 14 und die Transporteinheiten 18, 22 können jeweils eine Transporteinrichtung 15 aufweisen.

Über die Zuführeinrichtung 12 können der Vorrichtung 10 Vorformlinge aus thermoplastischem Material zugeführt werden. Die zugeführten Vorformlinge können von der Übergabeeinheit 14 empfangen und an die Heizeinrichtung 16 übergeben werden. In der Heizeinrichtung 16 können die Vorformlinge für eine Umformung zu Behältern thermisch konditioniert werden.

Nach dem thermischen Konditionieren können die Vorformlinge an einer ersten Übergabeposition 24 an die erste Transporteinheit 18 übergeben oder von der erste Transporteinheit 18 aus der Heizeinrichtung 16 entnommen werden. Die erste Transporteinheit 18 kann die thermisch konditionierten Vorformlinge zu der Formeinrichtung 20 transportieren. Dabei kann die erste Transporteinheit 18 die thermisch konditionierten Vorformlinge an einer zweiten Übergabeposition 26 an die Formeinrichtung 20 übergeben und/oder die thermisch konditionierten Vorformlinge in Formwerkzeuge der Formeinrichtung 20 einlegen. Die Formeinrichtung 20 kann die thermisch konditionierten Vorformlinge in den Formwerkzeugen z. B. mittels pneumatischer oder hydraulischer Umformung zu Behältern formen.

Die hergestellten Behälter können mittels der zweiten Transporteinheit 22 an einer dritten Übergabeposition 28 aus den Formwerkzeugen entnommen und zu weiteren Einrichtungen der Vorrichtung 10 transportiert werden. Dazu kann die zweite Transporteinheit 22 die Behälter an einer vierten Übergabeposition 30 an weitere Einrichtungen, beispielsweise an eine Sterilisationseinrichtung, eine Etikettiereinrichtung oder eine Fülleinrichtung, übergeben.

Die Vorrichtung 10 kann weitere Übergabeeinheiten 14, Transporteinheiten 18, 22 und Übergabepositionen 24, 26, 28, 30 aufweisen.

Die Transporteinrichtung 15 wird im Folgenden gemäß Figur 2 beschrieben.

Die Transporteinrichtung 15 weist mindestens eine Übergabeeinrichtung 32 auf, wobei die Transporteinrichtung 15 in diesem Beispiel eine Vielzahl von Übergabeeinrichtungen 32 aufweist. Die Anzahl der Übergabeeinrichtungen 32 ist nach oben hin offen. Bevorzugt kann die Transporteinrichtung 15 zwischen 5 und 120 Übergabeeinrichtungen 32, weiter vorzugsweise zwischen 10 und 60, am meisten bevorzugt zwischen 20 und 30 Übergabeeinrichtungen, aufweisen. Mindestens eine der Übergabeeinrichtungen 32 weist eine gesonderte Antriebseinrichtung 36 auf. Mittels der gesonderten Antriebseinrichtung 36 kann die Übergabeeinrichtung 32 unabhängig von anderen Übergabeeinrichtungen 32 bewegt werden. Dabei weisen in diesem Beispiel alle Übergabeeinrichtungen 32 gesonderte Antriebseinrichtungen 36 auf, so dass alle Übergabeeinrichtungen 32 unabhängig voneinander bewegt werden können.

Die mindestens eine Übergabeeinrichtung 32 weist ein Halteelement 38 auf, mit dem ein Behälter oder ein Vorformling 34 gegriffen werden kann

Weiter kann die Transporteinrichtung 15 eine Trägerplatte 40 aufweisen, die sich zwischen der ersten Übergabeposition 24 und der zweiten Übergabeposition 26 erstreckt. In diesem Beispiel ist die Trägerplatte 40 als ringförmige Bahn ausgebildet. Die Übergabeeinrichtungen 32 können dabei derart ausgebildet sein, dass sie sich entlang der ringförmigen Bahn lediglich in einer Fahrtrichtung 42 bewegen, nach dem Prinzip einer Einbahnstraße.

Der Streckenabschnitt der Trägerplatte 40, auf dem die Übergabeeinrichtungen 32 von der ersten Übergabeposition 24 zu der zweiten Übergabeposition 26 bewegt werden, kann als Transportstrecke 44 bezeichnet werden. Der andere Streckenabschnitt, auf dem die Übergabeeinrichtungen 32 von der zweiten Übergabeposition 26 zu der ersten Übergabeposition 24 bewegt werden, kann als Rückführstrecke 46 bezeichnet werden. In diesem Beispiel ist die Rückführstrecke 46 separat von der Transportstrecke 44 ausgebildet. In Figur 2 sind die Transportstrecke 44 und die Rückführstrecke 46 beispielhaft durch eine gestrichelte Linie voneinander abgegrenzt.

Die Übergabeeinrichtungen 32 können sich auf der Trägerplatte 40 frei bewegen. Dabei können die Halteelemente 38 z. B. durch eine Schwenkbewegung der Übergabeeinrichtung 32 um eine senkrechte Achse in eine beliebige Orientierung innerhalb einer waagrechten Ebene verschwenkt werden.

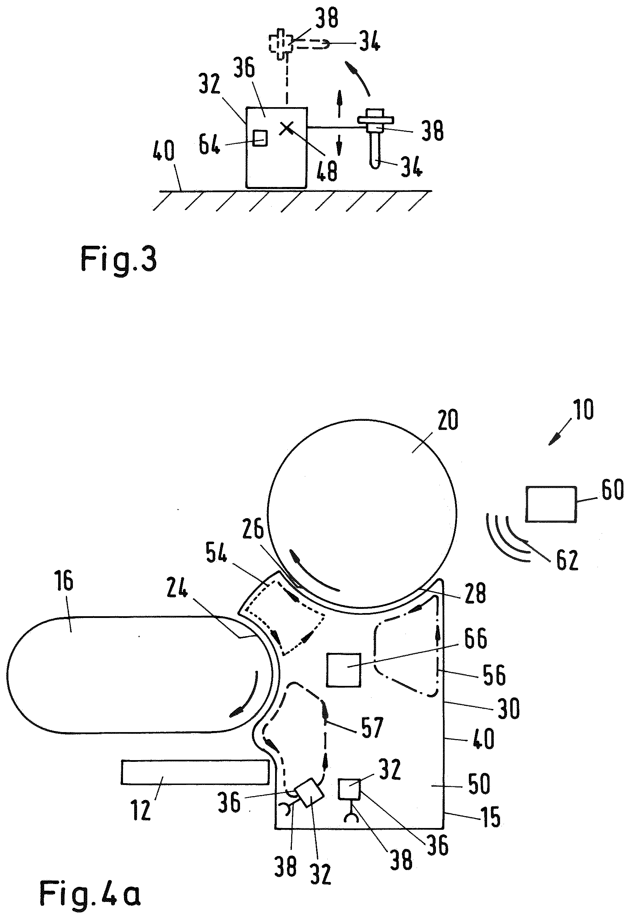

Zur näheren Erläuterung ist eine einzelne Übergabeeinrichtung 32 in Figur 3 schematisch dargestellt.

Die Übergabeeinrichtung 32 ist auf der Trägerplatte 40 angeordnet. Dabei kann die Übergabeeinrichtung 32 berührungslos auf der Trägerplatte 40 gelagert sein. Die Lagerung kann als eine Luftlagerung und/oder eine magnetische Lagerung ausgebildet sein. In beiden Fällen ist die Übergabeeinrichtung 32 auch schmierstofffrei gelagert.

Bei einer Luftlagerung kann, wenn die Formeinrichtung 20 die Vorformlinge mittels Blasluft zu Behältern umformt, die Quelle der Blasluft Druckluft für die Luftlagerung bereitstellen.

Insbesondere, wenn eine magnetische Lagerung vorgesehen ist, kann die Antriebseinrichtung 36 die Vorschubkraft mittels eines magnetischen Wechselfelds bereitstellen. Das magnetische Wechselfeld kann von der Antriebseinrichtung 36 erzeugt werden. Alternativ kann das magnetische Wechselfeld von einer externen Quelle bereitgestellt werden, z. B. durch eine Einrichtung an oder unter der Trägerplatte 40.

Weiter kann die Übergabeeinrichtung 32 als Antriebseinrichtung 36 einen planaren Motor aufweisen, der kabelgebunden oder durch einen Energiespeicher 64 der Übergabeeinrichtung 32 mit Energie versorgt wird. Wenn die Antriebseinrichtung 36 einen Energiespeicher 64 aufweist, kann die Übergabeeinrichtung 32 autonom von der Transporteinrichtung 15 bewegt werden. Eine Kabelverbindung zwischen der Übergabeeinrichtung 32 und der Transporteinrichtung 15 wird dann nicht zwingend benötigt. Weiter können die Übergabeeinrichtungen 32 dann Sensoren aufweisen, die z. B. eine Bestimmung der Position und oder des Zustands der Übergabeeinrichtung 32 bzw. der Antriebseinrichtung 36 ermitteln können. Signale der Sensoren können zur Steuerung der Übergabeeinrichtungen 32 verwendet werden.

Das Halteelement 38 kann Greifer aufweisen, die zum Greifen eines Halsbereiches eines Vorformlings 34 oder Behälter ausgebildet sein können. Das Halteelement 38 kann dazu in einem vertikalen Abstand von der Trägerplatte 40 angeordnet sein, der größer als eine Länge der Vorformlinge 34 oder Behälter ist. Damit kann die Übergabeeinrichtung 32 frei auf der Trägerplatte 40 bewegt werden, ohne dass die Behälter oder Vorformlinge 34 mit der Trägerplatte 40 kollidieren.

Weiter kann das Halteelement 38 höhenverstellbar sein. Dazu kann die Antriebseinrichtung 36 zur Höhenverstellung der Übergabeeinrichtung 32 ausgebildet sein. Alternativ oder zusätzlich kann das Halteelement 38 in Bezug auf die Übergabeeinrichtung 32 in der Höhe verstellbar sein.

Die Übergabeeinrichtungen 32 können damit Behälter oder Vorformlinge 34 an den Übergabepositionen 24, 26, 28, 30 in verschiedenen Höhen übergeben. Damit können die übergebenden bzw. empfangenden Einrichtungen der Vorrichtung 10 mit größeren Toleranzen in der Höhe aufgestellt bzw. montiert werden. Die Höhenverstellung des Halteelements 36 kann dabei während der Bewegung der Übergabeeinrichtung 32 zwischen den Übergabepositionen 24, 26, 28, 30 erfolgen.

Alternativ oder zusätzlich kann das Halteelement 38 um eine waagrechte Achse 48 schwenkbar gelagert sein. Das Halteelement 38 kann damit von einer Orientierung in einer waagrechten Ebene in eine Orientierung in einer senkrechten Ebene geschwenkt werden. Dies ist in Figur 3 mit dem gestrichelt angedeuteten Halteelement 38 dargestellt.

Auch ein von dem Halteelement 38 gehaltener Behälter oder Vorformling 34 kann damit um die waagrechte Achse 48 geschwenkt werden. Dies kann z. B. die benötigte Grundfläche der Übergabeeinrichtung 32 auf der Trägerplatte 40 verringern. Insbesondere während der Bewegung zwischen den Übergabepositionen 24, 26, 28, 30 wird damit die Kollisionsgefahr zwischen den Übergabeeinrichtungen 32 verringert und eine eventuelle Beschädigung der gehaltenen Behälter oder Vorformlinge 34 vermieden. Weiter wird dadurch die Flexibilität der Transporteinrichtung 15 weiter erhöht, da die Übergabeeinrichtungen 32 dann Engstellen sicherer passieren können. Weiter können dann mehr Übergabeeinrichtungen 32 auf der gleichen Fläche bereitgestellt werden, ohne dass die Kollisionsgefahr erhöht wird.

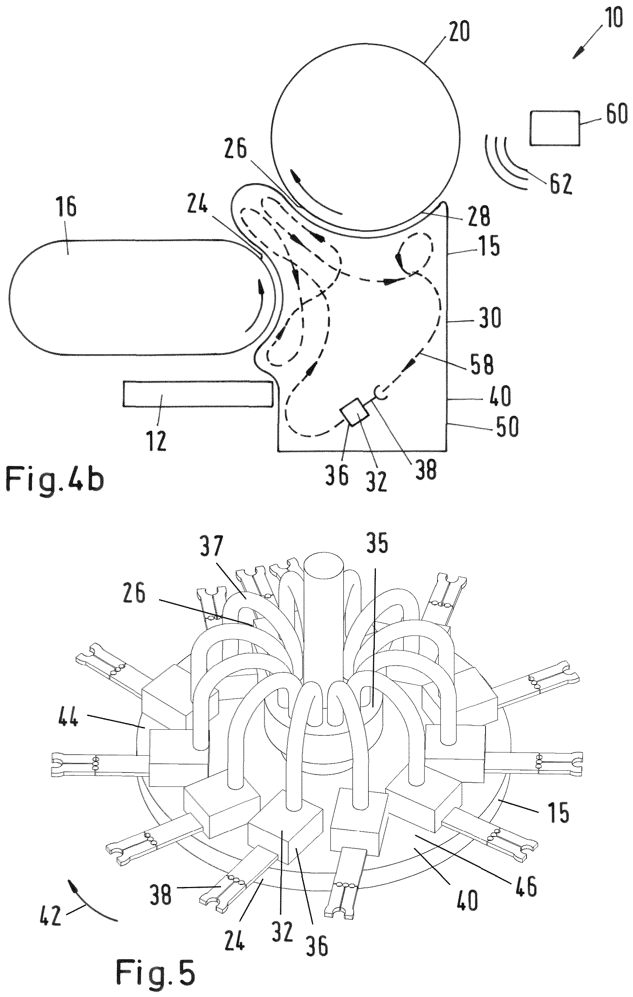

In den Figuren 4a und 4b sind weitere Ausführungsbeispiele der Vorrichtung 10 in schematischer Darstellung gezeigt.

Gemäß Figur 4a sind die Zuführeinrichtung 12, die Heizeinrichtung 16 und die Formeinrichtung 20 um eine Transporteinrichtung 15 gruppiert. Die dargestellt Gruppierung ist lediglich beispielhaft zu verstehen und kann beliebig angepasst werden.

Die Pfeile an der Heizeinrichtung 16 und der Formeinrichtung 20 geben eine Bewegungsrichtung der Behälter bzw. Vorformlinge in den beiden Einrichtungen an. An den Übergabepositionen 24, 26, 28, 30 ist es vorteilhaft, wenn die Übergabeeinrichtungen 32 parallel zu dieser Bewegungsrichtung bewegt werden, um eine Übergabe der Behälter bzw. Vorformlinge 34 durchzuführen.

In diesem Beispiel ist eine einzige Trägerplatte 40 vorgesehen. Die Trägerplatte 40 der Transporteinrichtung 15 erstreckt sich in diesem Beispiel in dem Bereich zwischen der Zuführeinrichtung 12, der Heizeinrichtung 16 und der Formeinrichtung 20 und erfasst auch die Übergabepositionen 24, 26, 28, 30. In diesem Beispiel werden die Übergabeeinheit 14 und die Transporteinheiten 18 und 22 aus Figur 1 durch eine einzige Transporteinrichtung 15 ersetzt. Es können jedoch beliebig viele Transporteinrichtungen 15 an der Vorrichtung 10 vorgesehen werden.

Die Übergabeeinrichtungen 32 können durch eine Steuereinheit 60 auf bestimmte Bahnen gesteuert bzw. programmiert werden. Die Kommunikation zwischen der Steuereinheit 60 und der mindestens einen Übergabeeinrichtung 32 kann über eine Signalverbindung 62 erfolgen. In diesem Beispiel ist eine kabellose Signalverbindung 62 vorgesehen. Alternativ kann jedoch auch eine kabelgebundene Signalverbindung verwendet werden.

Für einen Teil der Übergabeeinrichtungen 32 kann eine Bahn 52 vorgesehen werden, bei der Übergabeeinrichtungen 32 Vorformlinge aus der Zuführeinrichtung 12 übernehmen und an die Heizeinrichtung 16 übergeben.

Weiter kann eine zweite Bahn 54 für einen weiteren Teil der Übergabeeinrichtungen 32 vorgesehen werden, auf der Übergabeeinrichtungen 32 thermisch konditionierte Vorformlinge an der ersten Übergabeposition 24 übernehmen und an der zweiten Übergabeposition 26 an die Formeinrichtung 20 übergeben.

Auch kann eine dritte Bahn 56 für noch einen weiteren Teil der Übergabeeinrichtungen 32 vorgesehen werden, auf der die Übergabeeinrichtungen 32 hergestellte Behälter an der dritten Übergabeposition 28 aus der Formeinrichtung 20 entnehmen und zu der vierten Übergabeposition 30 bewegen.

Es kann weiter mindestens eine Auswurfposition 50 vorgesehen werden, die von Übergabeeinrichtungen 32 angefahren werden kann, die als Ausschuss deklarierte Behälter oder Vorformlinge 34 transportieren. Dazu kann die Vorrichtung 10 eine oder mehrere Inspektionseinrichtungen 66 aufweisen, die z. B. über der Trägerplatte 40 an einer oder mehrerer der Bahnen 52, 54, 56 angeordnet sein kann. Die Übergabeeinrichtungen 32 können die Behälter oder Vorformlinge 34 dann vor einer Übergabe an eine der Einrichtungen 16, 20 oder weiterer Einrichtungen zunächst durch die Inspektionseinrichtung 66 inspizieren lassen. Falls eine Inspektion einen Behälter oder Vorformling 34 als Ausschuss deklariert, kann die entsprechende Übergabeeinrichtung 32 abweichend von den Bahnen 52, 54, 56 zu der Auswurfposition 50 bewegt werden und den entsprechenden Behälter oder Vorformling 34 auswerfen.

In einem anderen Ausführungsbeispiel gemäß Figur 4b kann eine einzige Bahn 58 für die Übergabeeinrichtungen 32 vorgesehen werden. Die Übergabeeinrichtungen 32 laufen dann alle Übergabepositionen 24, 26, 28, 30 an. Auf Grund der unabhängigen Bewegung der Übergabeeinrichtungen 32 voneinander kann die Bahn 58 sich auch kreuzen.

Dabei kann in diesem Beispiel die Heizeinrichtung 16 die thermisch zu konditionierenden Vorformlinge in eine im Vergleich zu den Beispielen in den Figuren 1 und 4a gegenläufige Richtung bewegen.

Auch in diesem Beispiel kann eine Übergabeeinrichtung 32, deren Behälter oder Vorformling 34 als Ausschuss deklariert wird, von der Bahn 58 abweichen und durch die Antriebseinrichtung 36 zu einer Auswurfposition 50 bewegt werden.

In Figur 5 wird ein weiteres Ausführungsbeispiel der Transporteinrichtung 15 dargestellt.

In diesem Beispiel können die Antriebseinrichtungen 36 jeweils mit einer Leitung 37 über eine Dreheinführung 35 mit einer Blasluftquelle der Vorrichtung 10 und/oder einer Energiequelle und/oder der Steuereinheit 60 verbunden werden. Bei einer Verbindung mit einer Blasluftquelle können die Antriebseinrichtungen 36 können dann mittels Druckluft auf der Trägerplatte 40 luftgelagert werden, wie zu Figur 3 bereits erläutert wurde. Bei einer Verbindung mit einer Energiequelle können die Antriebseinrichtungen 36 über die Leitung 37 mit Energie versorgt werden. Bei einer Verbindung mit der Steuereinheit 60 können Steuersignale und/oder Sensorsignale zwischen der jeweiligen Antriebseinrichtung 36 und der Steuereinheit 60 ausgetauscht werden. Steuersignale und/oder Sensorsignale können alternativ über eine kabellose Signalverbindung ausgetauscht werden.

Während der Bewegung der Übergabeeinrichtungen 32 in der durch den Pfeil 42 angegebenen Richtung dreht sich die Dreheinführung 35 mit. Die Dreheinführung 35 führt die Leitungen 37 analog zu der Bewegung der Übergabeeinrichtungen 32.

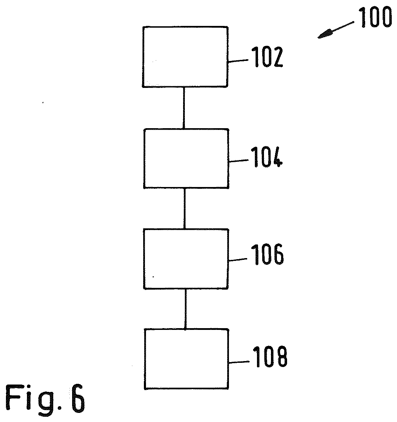

Ein Verfahren 100 zum Steuern der oben beschriebenen Vorrichtung wird mittels des in Figur 6 dargestellten Flussdiagramms erläutert.

In einem ersten Schritt 102 wird die mindestens eine Übergabeeinrichtung zu der ersten Übergabeposition bewegt. Die Bewegung der Übergabeeinrichtung erfolgt mittels der gesonderten Antriebseinrichtung, die der Übergabeeinrichtung zugeordnet ist.

In einem weiteren Schritt 104 kann der Behälter oder Vorformling mittels des Halteelements der Übergabeeinrichtung gegriffen werden. Das Greifen kann unterhalb eines Halterings des Behälters oder Vorformlings an dessen Halsbereich erfolgen.

Der Behälter oder Vorformling wird durch die Übergabeeinrichtung in einem weiteren Schritt 106 zu der zweiten Übergabeposition bewegt. Auch in diesem Fall wird die Übergabeeinrichtung durch die gesonderte Antriebseinrichtung bewegt.

In einem weiteren Schritt 108 wird der Behälter oder Vorformling durch die Übergabeeinrichtung an eine weitere Einrichtung, z. B. die Heizeinrichtung oder die Formeinrichtung übergeben. Weiter kann eine Übergabe beispielsweise an eine Sterilisationseinrichtung, eine Etikettiereinrichtung oder eine Fülleinrichtung erfolgen.

Das oben beschriebene Beispiel dient in keiner Weise einer Beschränkung der Erfindung. Vielmehr kann die Erfindung in vielfältiger Weise abgewandelt werden. Alle oben beschriebenen Merkmale der Erfindung können allein oder in Kombination miteinander wesentlich für die Erfindung sein.

### Bezugszeichenliste

- 10: Vorrichtung zum Herstellen von Behältern
- 12: Zuführeinrichtung
- 14: Übergabeeinheit
- 15: Transporteinrichtung
- 16: Heizeinrichtung
- 18: erste Transporteinheit
- 20: Formeinrichtung
- 22: zweite Transporteinheit
- 24: erste Übergabeposition
- 26: zweite Übergabeposition
- 28: dritte Übergabeposition
- 30: vierte Übergabeposition
- 32: Übergabeeinrichtung
- 34: Vorformling
- 35: Dreheinführung
- 36: Antriebseinrichtung
- 37: Leitung
- 38: Halteelement
- 40: Trägerplatte
- 42: Fahrtrichtung
- 44: Transportstrecke
- 46: Rückführstrecke
- 48: waagrechte Achse
- 50: Auswurfposition
- 52: Bahn
- 54: Bahn
- 56: Bahn
- 58: Bahn
- 60: Steuereinheit
- 62: Signalverbindung
- 64: Energiespeicher
- 66: Inspektionseinrichtung

## Patentansprüche

1. Vorrichtung zum Herstellen von Behältern aus Vorformlingen (34) aus thermoplastischem Material, wobei die Vorrichtung (10) mindestens eine Transporteinrichtung (15) mit mindestens einer Übergabeeinrichtung (32) zum Bewegen von Behältern und/oder Vorformlingen (34) zwischen einer ersten Übergabeposition (24) und einer zweiten Übergabeposition (26) umfasst, wobei die Übergabeeinrichtung (32) ein Halteelement (38) zum Halten eines Behälters und/oder Vorformlings (34) aufweist, wobei die Transporteinrichtung (15) für die mindestens eine Übergabeeinrichtung (32) eine gesonderte Antriebseinrichtung (36) zum Bewegen der Übergabeeinrichtung (32) zwischen einer ersten Übergabeposition (24) und einer zweiten Übergabeposition (26) aufweist, **dadurch gekennzeichnet, dass** die Transporteinrichtung (15) eine sich zumindest entlang einer Transportstrecke (44) zwischen der ersten und zweiten Übergabeposition (26) erstreckende Trägerplatte (40) umfasst, auf der die mindestens eine Übergabeeinrichtung (32) angeordnet und mittels der Antriebseinrichtung (36) frei auf der Trägerplatte (40) bewegbar ist.

2. Vorrichtung nach Anspruch 1, **dadurch gekennzeichnet, dass** die Trägerplatte (40) sich zwischen der ersten und zweiten Übergabeposition (26) zusätzlich zumindest entlang einer von der Transportstrecke (44) separaten Rückführstrecke (46) erstreckt.

3. Vorrichtung nach Anspruch 1 oder 2, **dadurch gekennzeichnet, dass** die Antriebseinrichtung (36) weiter zum Schwenken der Übergabeeinrichtung (32) ausgebildet ist.

4. Vorrichtung nach Anspruch 3, **dadurch gekennzeichnet, dass** die Antriebseinrichtung (36) zum Schwenken der Übergabeeinrichtung (32) um eine waagrecht angeordnete Achse (48) ausgebildet ist.

5. Vorrichtung nach einem der Ansprüche 1 bis 4, **dadurch gekennzeichnet, dass** die Antriebseinrichtung (36) weiter zur Höhenverstellung der Übergabeeinrichtung (32) ausgebildet ist.

6. Vorrichtung nach einem der Ansprüche 1 bis 5, **dadurch gekennzeichnet, dass** die mindestens eine Übergabeeinrichtung (32) berührungslos und/oder schmierstofffrei an der Transporteinrichtung (15) gelagert, vorzugsweise magnetisch gelagert und/oder luftgelagert, ist.

7. Vorrichtung nach einem der Ansprüche 1 bis 6, **dadurch gekennzeichnet, dass** die Antriebseinrichtung (36) ein magnetisches Antriebselement zum Erzeugen einer Vorschubkraft mittels eines magnetischen Wechselfelds ist.

8. Vorrichtung nach einem der Ansprüche 1 bis 7, **dadurch gekennzeichnet, dass** die Antriebseinrichtung (36) mindestens einen planaren Motor aufweist.

9. Vorrichtung nach einem der Ansprüche 1 bis 8, **dadurch gekennzeichnet, dass** die Transporteinrichtung (15) mindestens zwei Übergabeeinrichtungen (32) aufweist.

10. Vorrichtung nach einem der Ansprüche 1 bis 9, **dadurch gekennzeichnet, dass** die Vorrichtung (10) eine Steuereinheit (60) zum Steuern der Antriebseinrichtung (36) aufweist, wobei die Steuereinheit (60) über eine Signalverbindung (62) mit der Antriebseinrichtung (36) verbunden ist.

11. Vorrichtung nach Anspruch 10, **dadurch gekennzeichnet, dass** die Signalverbindung (62) eine kabellose Verbindung ist, wobei die mindestens eine Übergabeeinrichtung (32) vorzugsweise einen elektrischen Energiespeicher (64) zum Betreiben der kabellosen Signalverbindung (62) und der Antriebseinrichtung (36) aufweist.

12. Vorrichtung nach Anspruch 10 oder 11, **dadurch gekennzeichnet, dass** die Steuereinheit (60) mittels der Antriebseinrichtung (36) zum Bewegen der mindestens einen Übergabeeinrichtung (32) zu der ersten Übergabeposition (24), an der ein Behälter oder Vorformling (34) mittels des Halteelements (38) gegriffen wird; und zum Bewegen der Übergabeeinrichtung (32) entlang der Transportstrecke (44) zu der zweiten Übergabeposition (26), an der der Behälter oder Vorformling (34) aus dem Halteelement (38) entnommen wird, ausgebildet ist.

13. Verfahren zum Steuern einer Vorrichtung nach einem der Ansprüche 1 bis 12, wobei das Verfahren (100) zumindest die folgenden Schritte aufweist:
- Bewegen (102) der mindestens einen Übergabeeinrichtung zu der ersten Übergabeposition mittels der gesonderten Antriebseinrichtung;
- Greifen (104) eines Behälters oder Vorformlings mittels des Halteelements;
- Bewegen (106) der mindestens einen Übergabeeinrichtung zu der zweiten Übergabeposition mittels der Antriebseinrichtung; und
- Übergeben (108) des Behälters oder Vorformlings.

## Claims

1. Device for producing containers from preforms (34) of thermoplastic material, wherein the device (10) comprises at least one transport device (15) with at least one transfer device (32) for moving containers and/or preforms (34) between a first transfer position (24) and a second transfer position (26), wherein the transfer device (32) has a holding element (38) for holding a container and/or preform (34), wherein the transport device (15) for the at least one transfer device (32) has a separate drive device (36) for moving the transfer device (32) between a first transfer position (24) and a second transfer position (26), **characterised in that** the transport device (15) comprises a carrier plate (40) extending at least along a transport path (44) between the first and second transfer positions (26), on which the at least one transfer device (32) is arranged and can be moved freely on the carrier plate (40) by means of the drive device (36).

2. Device according to claim 1, **characterised in that** the carrier plate (40) additionally extends between the first and second transfer positions (26) at least along a return path (46) separate from the transport path (44).

3. Device according to claim 1 or 2, **characterised in that** the drive device (36) is further designed to pivot the transfer device (32).

4. Device according to claim 3, **characterised in that** the drive device (36) is designed for pivoting the transfer device (32) about a horizontally arranged axis (48).

5. Device according to one of claims 1 to 4, **characterised in that** the drive device (36) is further designed to adjust the height of the transfer device (32).

6. Device according to one of claims 1 to 5, **characterised in that** the at least one transfer device (32) is mounted on the transport device (15) in a contactless and/or lubricant-free manner, preferably magnetically mounted and/or air-mounted.

7. Device according to one of claims 1 to 6, **characterised in that** the drive device (36) is a magnetic drive element for generating a feed force by means of an alternating magnetic field.

8. Device according to one of claims 1 to 7, **characterised in that** the drive device (36) has at least one planar motor.

9. Device according to one of claims 1 to 8, **characterised in that** the transport device (15) has at least two transfer devices (32).

10. Device according to one of claims 1 to 9, **characterised in that** the device (10) has a control unit (60) for controlling the drive device (36), the control unit (60) being connected to the drive device (36) via a signal connection (62).

11. Device according to claim 10, **characterised in that** the signal connection (62) is a wireless connection, wherein the at least one transfer device (32) preferably comprises an electrical energy store (64) for operating the wireless signal connection (62) and the drive device (36).

12. Device according to claim 10 or 11, **characterised in that** the control unit (60) is designed by means of the drive device (36) to move the at least one transfer device (32) to the first transfer position (24), at which a container or preform (34) is gripped by the holding element (38); and to move the transfer device (32) along the transport path (44) to the second transfer position (26), at which the container or preform (34) is removed from the holding element (38).

13. Method of controlling a device according to any one of claims 1 to 12, wherein the method (100) comprises at least the following steps:
- moving (102) the at least one transfer device to the first transfer position by the separate drive device;
- gripping (104) of a container or preform by the holding element;
- moving (106) the at least one transfer device to the second transfer position by the drive means; and
- transferring (108) the container or preform.

## Revendications

1. Dispositif pour fabriquer des récipients à partir de préformes (34) en matériau thermoplastique, le dispositif (10) comprenant au moins un dispositif de transport (15) avec au moins un dispositif de transfert (32) pour déplacer des récipients et/ou des préformes (34) entre une première position de transfert (24) et une deuxième position de transfert (26), le dispositif de transfert (32) présentant un élément de retenue (38) pour maintenir un récipient et/ou une préforme (34), le dispositif de transport (15) pour le au moins un dispositif de transfert (32) présentant un dispositif d'entraînement (36) séparé pour déplacer le dispositif de transfert (32) entre une première position de transfert (24) et une deuxième position de transfert (26), **caractérisé en ce que** le dispositif de transport (15) comprend une plaque de support (40) s'étendant au moins le long d'un trajet de transport (44) entre la première et la deuxième position de transfert (26), sur laquelle le au moins un dispositif de transfert (32) est disposé et peut être déplacé librement sur la plaque de support (40) au moyen du dispositif d'entraînement (36).

2. Dispositif selon la revendication 1, **caractérisé en ce que** la plaque de support (40) s'étend en outre entre la première et la deuxième position de transfert (26) au moins le long d'une section de retour (46) séparée de le trajet de transport (44).

3. Dispositif selon la revendication 1 ou 2, **caractérisé en ce que** le dispositif d'entraînement (36) est en outre conçu pour faire pivoter le dispositif de transfert (32).

4. Dispositif selon la revendication 3, **caractérisé en ce que** le dispositif d'entraînement (36) est conçu pour faire pivoter le dispositif de transfert (32) autour d'un axe (48) disposé horizontalement.

5. Dispositif selon l'une des revendications 1 à 4, **caractérisé en ce que** le dispositif d'entraînement (36) est en outre conçu pour le réglage en hauteur du dispositif de transfert (32).

6. Dispositif selon l'une des revendications 1 à 5, **caractérisé en ce que** le au moins un dispositif de transfert (32) est monté sans contact et/ou sans lubrification sur le dispositif de transport (15), de préférence sur palier magnétique et/ou sur palier à air.

7. Dispositif selon l'une des revendications 1 à 6, **caractérisé en ce que** le dispositif d'entraînement (36) est un élément d'entraînement magnétique destiné à générer une force d'avance au moyen d'un champ magnétique alternatif.

8. Dispositif selon l'une des revendications 1 à 7, **caractérisé en ce que** le dispositif d'entraînement (36) comprend au moins un moteur plan.

9. Dispositif selon l'une des revendications 1 à 8, **caractérisé en ce que** le dispositif de transport (15) comporte au moins deux dispositifs de transfert (32).

10. Dispositif selon l'une des revendications 1 à 9, **caractérisé en ce que** le dispositif (10) comporte une unité de commande (60) pour commander le dispositif d'entraînement (36), l'unité de commande (60) étant reliée au dispositif d'entraînement (36) par une liaison de signalisation (62).

11. Dispositif selon la revendication 10, **caractérisé en ce que** la liaison de signalisation (62) est une liaison sans fil, ledit au moins un dispositif de transfert (32) comprenant de préférence un accumulateur d'énergie électrique (64) pour faire fonctionner la liaison de signalisation sans fil (62) et le dispositif d'entraînement (36).

12. Dispositif selon la revendication 10 ou 11, **caractérisé en ce que** l'unité de commande (60) est conçue, au moyen du dispositif d'entrainement (36), pour déplacer le au moins un dispositif de transfert (32) vers la première position de transfert (24), dans laquelle un récipient ou une préforme (34) est saisi(e) au moyen de l'élément de retenue (38); et pour déplacer le dispositif de transfert (32) le long du trajet de transport (44) vers la deuxième position de transfert (26), dans laquelle le récipient ou la préforme (34) est retiré(e) de l'élément de retenue (38).

13. Procédé de commande d'un dispositif selon l'une quelconque des revendications 1 à 12, ledit procédé (100) comprenant au moins les étapes suivantes:
- déplacer (102) le au moins un dispositif de transfert vers la première position de transfert au moyen du dispositif d'entraînement séparé;
- la préhension (104) d'un récipient ou d'une préforme au moyen de l'élément de retenue;
- déplacer (106) le au moins un dispositif de transfert vers la deuxième position de transfert au moyen du dispositif d'entraînement; et
- transférer (108) le récipient ou la préforme.
